# EUROPEAN PATENT SPECIFICATION

(11) **EP 0 509 494 B1**
(45) Date of publication and mention of the grant of the patent: **05.02.1997**
(21) Application number: 92106559.5
(22) Date of filing: 15.04.1992
(51) Int. Cl.: C08G 18/08, C08G 18/83

(54) **Process for the production of polyurethane, and true spherical, fine polyurethane particles**
Verfahren zur Herstellung von Polyurethanen und wirklich kugelförmigen Feinteilchen
Procédé pour la préparation de polyuréthane, et des particules vraiment sphériques fines

(30) Priority: 16.04.1991 JP 109683/91
(43) Date of publication of application: 21.10.1992
(73) Proprietor: DAINICHISEIKA COLOR & CHEMICALS MFG. CO. LTD., Chuo-ku Tokyo 103 (JP); UKIMA COLOUR & CHEMICALS MFG. CO. LTD., Chuo-ku Tokyo (JP)
(72) Inventor: Kuriyama, Katsumi, Koshigaya-shi, Saitama-ken (JP); Kuroda, Kohichi, Kita-ku, Tokyo (JP)
(74) Representative: Wächtershäuser, Günter, Prof. Dr.

(56) References cited:
- EP-A- 0 320 690
- EP-A- 0 414 085
- EP-A- 0 416 659
- GB-A- 2 107 480
- US-A- 4 107 256

## Description

### BACKGROUND OF THE INVENTION

### 1) Field of the Invention

This invention relates to a process for the production of a polyurethane which is suitable for use in powder coating compositions or powder molding composition and also valuable as an additive for coating compositions or as a modifier for resins, rubbers or elastomers.

### 2) Description of the Related Art

Conventional production processes for powdery polyurethane includes, for example, mechanical grinding of solid polyurethane at low temperatures, precipitation of polyurethane from an aqueous emulsion and subsequent drying, spray drying, and addition of a poor solvent to solution-polymerized polyurethane to precipitate polyurethane in a granular form, followed by collection by filtration and further by drying for the elimination of the solvent.

These conventional processes are however accompanied by the problems that the resulting polyurethane particles have irregular shapes and cannot be obtained as fine powdery polyurethane. They also involve the additional problem that the production cost is considerably high.

On the other hand, processes making use of an inert liquid have also been known, including those disclosed in U.S. Patent No. 3,787,525, Japanese Patent Application Laid-Open (Kokai) No. SHO 53-129295 and Japanese Patent Application Laid-Open (Kokai) No. HEI 2-38453.

The former processes are not considered practical for inferior productivity. The latter processes all require a special organic surfactant and, moreover, a portion of the surfactant must be dissolved in an inert liquid as a polymerization medium, leading to the problem that a limitation is imposed on usable inert liquids.

Further, it is impossible to avoid mixing of the surfactant in the resulting polyurethane, leading to the problem that the surfactant may give adverse effects on the properties of the polyurethane. Vigorous agitation is also required for the stabilization of the emulsified (i.e., suspended) reactants. Insufficient agitation leads to the drawback that particles of a low softening-point or low hardness polyurethane cannot be produced because particles become larger due to coagulation of the polyurethane dispersoid itself polymerized in the dispersion or due to melt-cohesion of polyurethane particles themselves in the step in which the polyurethane particles are converted into powder from the dispersion.

### SUMMARY OF THE INVENTION

An object of the present invention is to overcome the above-described drawbacks of the conventional processes and hence to easily provide polyurethane particles available in various compositions permitting use in a wide range of application fields.

The present inventors have found that a hydrophobic silica dispersed in an inert liquid can emulsify easily and, moreover, as fine particles an isocyanate compound and an active-hydrogen-containing compound, both being raw materials for the synthesis of a polyurethane, in the inert liquid, leading to the completion of the present invention.

In one aspect of the present invention, there is thus provided a process for the production of a polyurethane as defined in claim 1, which comprises using a hydrophobic silica as an emulsifier upon emulsion polymerization of an isocyanate compound and an active-hydrogen-containing compound in an inert liquid.

In another aspect of the present invention, there are also provided true spherical, fine polyurethane particles comprising polyurethane particles surface-coated with a hydrophobic silica.

As a characteristic property of the hydrophobic silica employed in the present invention, the hydrophobic silica acts to prevent the particles of the emulsified polyurethane dispersoid from coagulating into larger masses due to an increase in viscosity which would otherwise occur in the course of the synthesis of the polyurethane. This action can prevent coagulation of polyurethane particles upon separation of polyurethane from the inert liquid to produce a powdery polyurethane, so that the action serves very effectively for the production of powdery polyurethane in the form of fine particles. This action is fundamentally different from that available from organic emulsifiers or dispersion stabilizers known to date.

### BRIEF DESCRIPTION OF THE DRAWINGS

FIG. 1 is an electron micrograph of true spherical, fine polyurethane particles according to this invention; and
FIG. 2 is a schematic cross-section of a true spherical, fine polyurethane particle according to this invention.

### DETAILED DESCRIPTION OF THE INVENTION AND PREFERRED EMBODIMENTS

To synthesize the polyurethane by adding the isocyanate compound and the active-hydrogen-containing compound, the raw materials for the synthesis of the polyurethane, to the inert liquid and then emulsifying and reacting the raw materials there, the inert liquid with the hydrophobic silica dispersed therein is charged in a jacketed synthesis reactor equipped with a stirrer or emulsifier. A mixture which has been prepared in advance by combining the isocyanate compound with the active-hydrogen-containing compound is then gradually added while stirring the inert liquid, whereby the mixture is emulsified. The stirring is continued to react the isocyanate compound with the active-hydrogen-containing compound, so that the polyurethane is synthesized and is obtained in the form of the dispersion.

Besides the method described above, the addition of the isocyanate compound and the active-hydrogen-containing compound may also be effected by adding the isocyanate compound and the active-hydrogen-containing compound to a synthesis reactor after separately emulsifying them.

Although no particular limitation is imposed on the temperature for the synthesis, preferred temperatures range from 40°C to 120°C. The hydrophobic silica can be used in an amount of 0.5 part by weight or more, preferably 1.0-20 parts by weight per 100 parts by weight of the isocyanate compound or the active-hydrogen-containing compound. Amounts less than 0.5 part by weight cannot emulsify the raw materials sufficiently, resulting in the formation of larger masses of a polyurethane in the course of its synthesis and hence making it difficult to obtain a fine polymer dispersion as intended. On the other hand, amounts greater than 20 parts by weight do not have any problem in the dispersing ability for the raw materials so that a polyurethane dispersion can be produced. These amounts are however excessive for drawing its action as an emulsifier and do not bring about any particular additional advantages.

The hydrophobic silica employed in the present invention is obtained by reacting a halogenated alkylsilane and/or an alkoxyalkylsilane with surface OH groups of hydrophilic silica.

Halogenated alkylsilanes are represented by the following formula: (R¹)ₙ-Si(X)ₘ wherein R¹ means a C₁-C₂₀ linear or branched alkyl group or -[Si(R³)₂-O-]ₚR³, p being 1-20 and R³ denoting a methyl or phenyl group, X is a halogen atom, n and m are individually an integer of 1-3, and n + m is 4.

On the other hand, alkoxyalkylsilane compounds are represented by the following formula: (R¹)ₙ-Si-(OR²)ₘ wherein R¹, n and m have the same meanings as defined above, and R² means a C₁-C₂₀ linear or branched alkyl group or -[Si(R³)₂-O-]ₚR³, p being 1-20 and R³ denoting a methyl or phenyl group.

These silane coupling agents undergo dehydrohalogenation or dealcoholation reaction with OH groups present on the surfaces of particles of hydrophilic silica, whereby their residual groups substitute for hydroxyl groups of the hydrophilic silica.

Particularly preferred hydrophobic groups which can be introduced by the above silane coupling agents are =Si=(CH₃)₂, -Si≡(CH₃)₃, ≡Si-C₈H₁₇, and ⁅Si(CH₃)₂-O-Si(CH₃)₂ 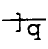 CH₃ (1≤q≤15, preferably 3≤q≤10) groups. The preferred average particle size of primary particles of these hydrophobic silicas may range from 7 nm to 50 nm although not necessarily limited thereto.

Upon actual use of the hydrophobic silica, it is necessary to finely disperse the hydrophobic silica in the inert liquid. This dispersion can be conducted using a known dispersing machine such as an ultrasonic dispersing machine, homogenizer, sand grind mill, ball mill, high-speed mixer or attritor.

It is to be noted that, throughout the specification, the term "polyurethane" which can be produced in accordance with the present invention embraces thermoplastic polyurethanes, crosslinked polyurethanes, thermoplastic urethane prepolymers and crosslinked urethane prepolymers. These polyurethanes and urethane prepolymers may be in the form of poly(urethane-urea).

Examples of isocyanate compounds usable in the present invention include those containing two isocyanate groups, such as tolylene diisocyanate, 4,4'-diphenylmethane diisocyanate, xylene diisocyanate, m-xylene diisocyanate, 1,6-hexamethylene diisocyanate, lysine diisocyanate, 4,4'-methylene-bis(cyclohexyl isocyanate), methycyclohexane-2,4-(or -2,6-)-diisocyanate, 1,3-bis(isocyanatomethyl)cyclohexane, isophorone diisocyanate, trimethylhexamethylene diisocyanate, and dimeric acid diisocyanate.

Also usable in the present invention are those obtained by converting these compounds into their isocyanurate forms, biuret forms, adduct forms and polymeric forms and containing polyfunctional isocyanate groups, for example, 4,4',4''-triphenylmethane triisocyanate, the cyclic trimer of 2,4-tolylene diisocyanate, the cyclic trimer of 2,6-tolylene diisocyanate, cyclic trimers of mixed 2,4- and 2,6-tolylene diisocyanates, the cyclic trimer of diphenylmethane-4,4'-diisocyanate, the reaction product of 3 moles of diphenylmethane-4,4'-diisocyanate and 1 mole of trimethylolpropane, the reaction product of 3 moles of 2,4-tolylene diisocyanate and 1 mole of trimethylolpropane, the reaction product of 3 moles of 2,6-tolylene diisocyanate and 1 mole of trimethylolpropane, 3 moles of 2,4-tolylene diisocyanate and 1 mole of trimethylolethane, the reaction product of 3 moles of 2,6-tolylene diisocyanate and 1 mole of trimethylolethane, and the reaction product of 3 moles of mixed 2,4- and 2,6-tolylene diisocyanates and 1 mole of trimethylolpropane; and those obtained by subjecting compounds, which containin one active hydrogen in a molecule, such as methanol, ethanol, phenol, cresol, ε-caprolactam, methyl ethyl ketoxime, acetoxime, N,N-dimethylhydroxyamine, diethyl malonate and acetyl-acetone and some of or all the isocyanate groups of these isocyanate compounds to an addition reaction.

Examples of active-hydrogen-containing compounds usable in the present invention include those reactive with isocyanate compounds, such as water, ethylene glycol, propylene glycol, 1,4-butanediol, 1,5-pentanediol, 1,6-hexanediol, octanediol, neopentyl glycol, glycerin, trimethylolpropane, hexanetriol, triethanolamine, pentaerythritol, ethylenediamine, propylamine, butylamine, 1,4-benzenethiol, sorbitol, polypropylene glycol, polyethylene glycol, polyethylene adipate, polybutylene adipate, polytetramethylene glycol, polyhexamethylene adipate, poly-ε-caprolactone, and polyhexamethylene carbonate. They can be used singly, in combination, or as copolymers.

The kinds and amounts of the isocyanate compound and active-hydrogen-containing compound used in the present invention and their ratio are determined depending on the application purpose of the resulting powdery polyurethane. For example, polyether diols and/or polyester diols and two-functional chain extenders can be used as active-hydrogen-containing compounds for thermoplastic powder coating compositions. By using isocyanate compounds as two-functional compounds, it is also possible to produce fine polyurethane particles ranging from soft particles to hard particles (i.e., of melting temperatures ranging from a low melting temperature to a high melting temperature) in accordance with a conventional production process of polyurethane.

Further, particles of a prepolymer having an NCO/OH ratio not greater than 1.0 can be used as a thermosetting powder coating composition by blending a block isocyanate with the particles. This powder coating composition can be applied to an object by a known method such as fluidized bed coating, spray coating or dust coating. The coating composition can form a coating film having high elasticity and excellent durability such as heat resistance and abrasion resistance on metals such as vehicles, home electric appliances, houses, construction materials and civil engineering materials.

A thermosetting powdery polyurethane can be obtained by using either one of or both the isocyanate compound and the active-hydrogen-containing compound in the form of three or higher functional compounds. Incorporation of such a powdery polyurethane in a paint or coating composition is useful for forming a coating film excellent in matting property, abrasion resistance, anti-scratching strength and elasticity. It can also bring about similar advantages when employed as a modifier for rubbers, elastomers and resins.

The inert liquid which is used in the present invention to form a continuous phase is a non-solvent for polyurethanes and contains no active hydrogen. Examples of the inert liquid include hydrocarbons such as pentane, hexane, heptane, octane, decane, petroleum ether, petroleum benzine, ligroin, petroleum spirit, cyclohexane and methylcyclohexane; fluorinated inert liquids such as trichlorofluoroethane, tetrachlorodifluoroethane and perfluoroether; perfluorocyclohexanone; perfluorobutyltetrahydrofuran; pefluorodecalin; perfluoro-n-butylamine; perfluoropolyether; and dimethylpolysiloxane. They can be used either singly or in combination. Among these inert liquids, those having a boiling point not higher than 150°C are preferred from the standpoint of the productivity in the separation step for each inert liquid and the polyurethane. The synthesis can be conducted at a low temperature provided that a known catalyst is employed. A synthesis temperatures of 40°C or higher is, however, preferred from the standpoint of the efficiency in work.

By separating the inert liquid from the polyurethane dispersion of this invention under normal pressure or reduced pressure, the powdery polyurethane of the present invention can be obtained. Apparatus known for this purpose, such as spray drier, filter-equipped vacuum drier, stirrer-equipped vacuum drier and tray-type drier, are all usable. The preferred drying temperature may range from 40°C to 80°C although it is affected by the vapor pressure of the inert liquid, the softening point and particle size of the powdery polyurethane, etc.

The powdery polyurethane produced as described above are in the form of true spherical particles having a particle size of from 0.5 µm to 100 µm. Where the composition of polyurethane is the same, the particle size is affected by the manner of emulsification (e.g., propeller-type stirrer, anchor-type stirrer, homogenizer, spiral agitator or the like) in the synthesis reactor and the intensity of the stirring force. In particular, the particle size is governed by the concentrations of the isocyanate compound and active-hydrogen-containing compound in the inert liquid and also by the kind and amount of the hydrophobic silica. The mechanical stirring and shear force at an initial stage of emulsification of the isocyanate compound and active-hydrogen-containing compound are especially important for the determination of the particle size of the dispersoids. The stronger the mechanical stirring and shear force, the smaller the particle size. Subsequent stirring and shear force do not give any significant influence. It is however to be noted that unduly strong stirring and shear force are not preferred as they tend to promote coagulation of dispersed particles.

Lower concentrations of the isocyanate compound and active-hydrogen-containing compound in the inert liquid tend to give a smaller particle size. The concentration preferred from the standpoint of productivity may range from 20 wt.% to 50 wt.%.

Factors important with respect to the hydrophobic silica are the kind and concentration of its surface groups as well as its dispersibility and its particle size after dispersion. When the hydrophobic silica serves as an emulsifier, it acts as a w/o- to o/o-type emulsifier. It can exhibit its action on the basis of correlation between the degree in hydrophilicity or hydrophobicity of the isocyanate compound and the kind of the active-hydrogen-containing compound and the inert liquid. As a result of an investigation conducted with these conditions in mind, it has been found that the particle size of the powdery polyurethane can be controlled by adjusting the amount of the hydrophobic silica relative to the amounts of the isocyanate compound and active-hydrogen-containing compound. The greater the amount of the hydrophobic silica in the above range, the smaller the particle size of the resulting powdery polyurethane, and the smaller the amount, the greater the particle size.

In the present invention, it is also possible to incorporate in at least a portion of at least one of the raw materials various additives, for example, colorants such as dyes and pigments, plasticizers, stabilizers, antioxidants, ultraviolet absorbers, anti-static agents, lubricating fillers and extender pigments upon production of the fine polyurethane particles, whereby fine polyurethane particles suited for various applications can be used.

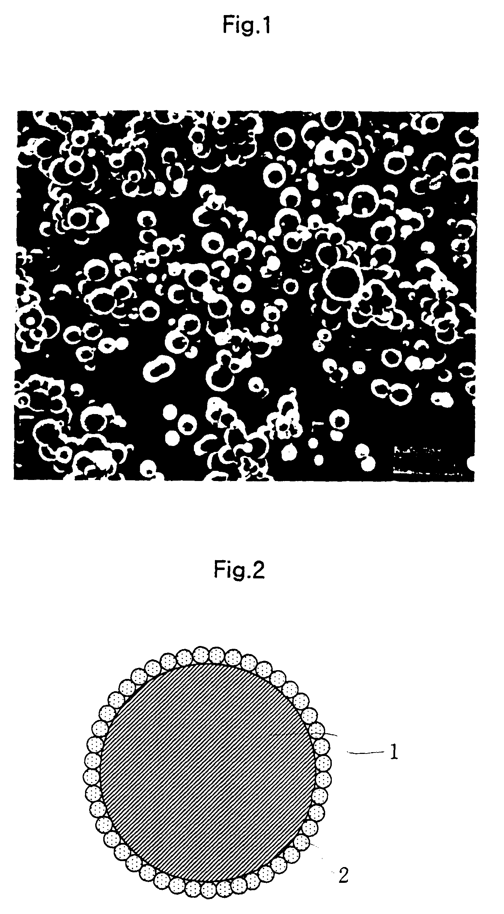

The present invention has various advantages. As is illustrated in the electron micrograph (magnification: x 750) in FIG. 1, these fine particles are substantially true spherical. As is also shown in the schematic in FIG. 2, hydrophobic silica particles are adhered to or otherwise cover the surface of each polyurethane particle so that fine particles having extremely high flowability can be obtained by simply separating the fine particles form the dispersion medium. Unlike the conventional technology, the present invention does not require any cumbersome and costly grinding step or classification procedure upon forming the resulting polyurethane into fine particles.

Described specifically, the process of this invention for the production of a polyurethane and the true spherical, fine polyurethane particles according to this invention have the following advantages:
1. Production of true spherical, fine polyurethane particles with a controlled particle size is feasible.
2. Production of true spherical, fine, thermoplastic or crosslinked polyurethane particles is feasible, so that a wide variety of application fields can be expected.
3. Resulting fine polyurethane particles are true spherical, and hydrophobic silica particles are uniformly adhered to or otherwise uniformly cover the surfaces of the fine polyurethane particles. The fine particles are therefore extremely good in flowability and their handling is easy. For example, their transportation and metering as well as their re-dispersion into a resin are extremely easy.

For the advantages described above, the true spherical, fine polyurethane particles according to the present invention have a variety of utility, for example, as coating compositions or lining materials, which can be applied by a known powder coating or forming method; industrial parts or components such as hammers, gears, packings and dust covers; soles of sport shoes; wrist watch bands; casters; paints or coating compositions for hoses, tubes, belt conveyors and electric cables; modifiers for rubbers and resins; urethane paints obtained by dissolving the particles in a solvent; material for synthetic leather; adhesives; and when colored, as colorants and powdery inks (toners).

The present invention will hereinafter be described specifically by the following examples and comparative examples, in which all designations of "part" or "parts" and "%" mean part or parts by weight and wt.% unless otherwise specifically indicated.

### Example 1

### (1) Preparation of hydrophobic silica dispersions

Hydrophobic silica dispersions having the following Nos. were each obtained by incorporating hydrophobic silica in an inert liquid as shown in Table 1 and dispersing it by an ultrasonic disperser until the dispersion became stable.

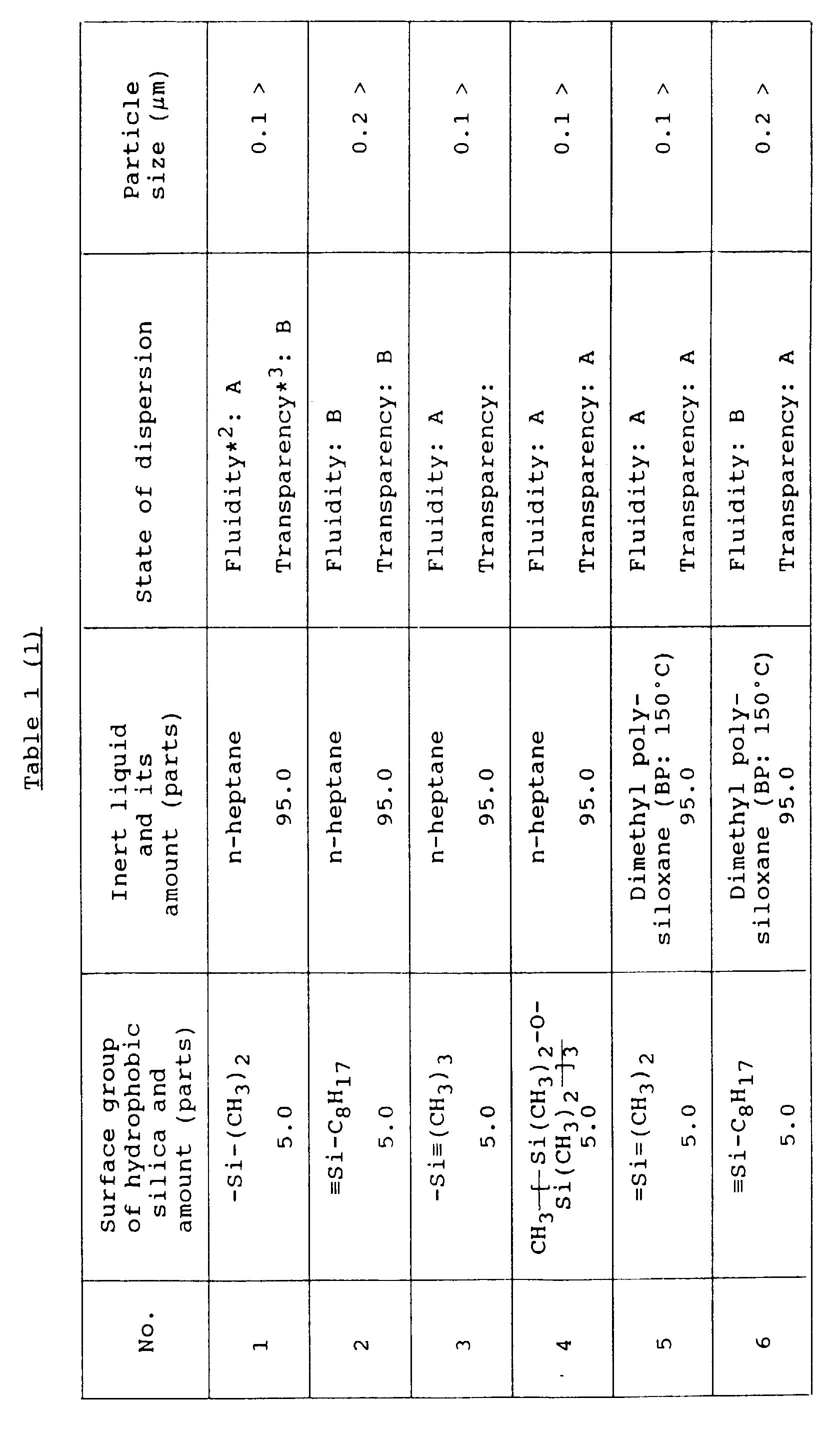

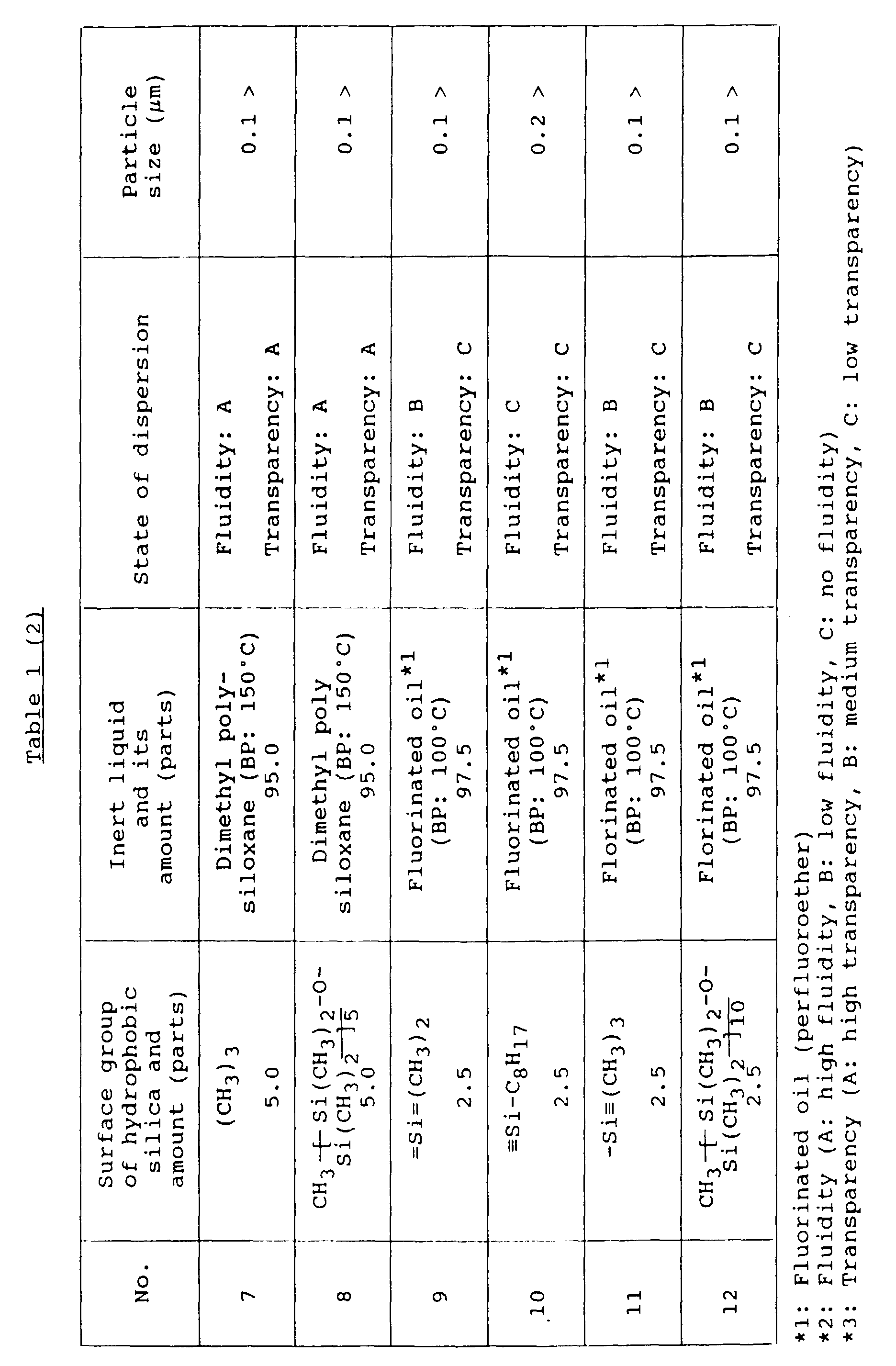

### Example 2

Polybutylene adipate (228 parts) having an average molecular weight of 1,020, 30.4 parts of 1,4-butanediol and 141.7 parts of MDI were heated to 40°C, at which they were stirred into a uniform mixture. The mixture was added gradually to 1,600 parts of the silica dispersion (No. 12) of Example 1, which had been provided in advance in a 3-ℓ stainless steel vessel, followed by emulsification for 30 minutes by a homogenizer. The emulsion thus obtained contained the dispersoid as particles having an average particle size of 3 µm and remained stable without separation.

The emulsion was then charged in a reactor equipped with an anchor-shaped stirrer, and was heated to 80°C while the stirrer was driven at 400 rpm. The reaction was completed in 3 hours, whereby a polyurethane dispersion was obtained. The dispersion was filtered and the inert liquid was separated out. The resulting concentrate was left over in a tray drier at 60°C for 48 hours, whereby any remaining inert liquid was eliminated to obtain powdery polyurethane (No. 1). The powdery polyurethane thus obtained was in the form of white, true spherical particles having an average particle size of 3 µm.

### Example 3

Polybutylene adipate (228 parts) having an average molecular weight of 1,020, 30.4 parts of 1,4-butanediol and 141.6 parts of MDI were heated to 40°C, at which they were stirred into a uniform mixture. The mixture was added gradually to a liquid mixture which had been provided in advance in a 3-ℓ stainless steel vessel by combining 800 parts of the silica dispersion (No. 12) of Example 1 with 800 parts of the fluorinated oil (∗1), followed by emulsification for 30 minutes by a homogenizer. The emulsion thus obtained contained a dispersoid as particles having an average particle size of 12 µm and remained stable without separation. The emulsion was then charged to a reactor equipped with an anchor-shaped stirrer, and was heated to 80°C while the stirrer was driven at 600 rpm. The reaction was completed in 3 hours, whereby a polyurethane dispersion was obtained. The dispersion was filtered and the inert liquid was separated out. The resulting concentrate was left over in a tray drier at 60°C for 48 hours, whereby any remaining inert liquid was eliminated to obtain powdery polyurethane (No. 2). The powdery polyurethane thus obtained was in the form of white, true spherical particles having an average particle size of 12 µm.

### Example 4

Polybutylene adipate (228 parts) having an average molecular weight of 1,020, 30.4 parts of 1,4-butanediol and 141.6 parts of MDI were heated to 40°C, at which they were stirred into a uniform mixture. The mixture was added gradually to a liquid mixture which had been provided in advance in a 3-ℓ stainless steel vessel by combining 320 parts of the silica dispersion (No. 12) of Example 1 with 1,280 parts of the fluorinated oil (∗1), followed by emulsification for 30 minutes by a homogenizer. The emulsion thus obtained contained a dispersoid as particles having an average particle size of 12 µm and remained stable without separation. The emulsion was then charged to a reactor equipped with an anchor-shaped stirrer, and was heated to 80°C while the stirrer was driven at 600 ppm. The reaction was completed in 3 hours, whereby a polyurethane dispersion was obtained. The dispersion was filtered and the inert liquid was separated out. The resulting concentrate was left over in a tray drier at 60°C for 48 hours, whereby any remaining inert liquid was eliminated to obtain powdery polyurethane (No. 3). The powdery polyurethane thus obtained was in the form of white, true spherical particles having an average particle size of 34 µm.

### Example 5

Polybutylene adipate (60.4 parts) having an average molecular weight of 2,000, 7.8 parts of 1,4-butanediol, 31.8 parts of 4,4'-methylenebis(cyclohexyl isocyanate) and 0.02 part of stannous octoate were heated to 40°C, at which they were stirred into a uniform mixture. The mixture was added gradually to a liquid mixture which had been provided in advance by mixing, for 20 minutes at a revolution velocity of 2,500 rpm, 100 parts of the silica dispersion (No. 5) of Example 1 and 300 parts of dimethyl polysiloxane (BP: 150°C) into a uniform mixture in a vacuum emulsifier equipped with a low-viscosity homogenizer (manufactured by Mizuho Kogyo K.K.), followed by emulsification for 40 minutes while the same revolution velocity was maintained. The emulsion thus obtained contained a dispersoid as particles having an average particle size of 7 µm and remained stable without separation. The reaction temperature was then elevated to 120°C. The reaction was completed in 5 hours, whereby a polyurethane dispersion was obtained. The dispersion was then transferred to a vacuum drier and the inert liquid was separated from the polyurethane dispersion under a reduced pressure of 50 mmHg or lower, whereby powdery polyurethane (No. 4) was obtained. The powdery polyurethane thus obtained was in the form of white, true spherical particles having an average particle size of 7 µm.

### Example 6

Polybutylene adipate (60.4 parts) having an average molecular weight of 2,000, 7.8 parts of 1,4-butanediol, 31.8 parts of 4,4'-methylenebis(cyclohexyl isocyanate) and 0.02 part of stannous octoate were heated to 40°C, at which they were stirred into a uniform mixture. The mixture was added gradually to a liquid mixture which had been provided in advance by mixing, for 20 minutes at a revolution velocity of 3,000 rpm, 50 parts of the silica dispersion (No. 5) of Example 1 and 350 parts of dimethyl polysiloxane (BP: 150°C) into a uniform mixture in a vacuum emulsifier equipped with a low-viscosity homogenizer (manufactured by Mizuho Kogyo K.K.), followed by emulsification for 50 minutes while the same revolution velocity was maintained. The emulsion thus obtained contained a dispersoid as particles having an average particle size of 22 µm and remained stable without separation. The reaction temperature was then elevated to 120°C. The reaction was completed in 5 hours, whereby a polyurethane dispersion was obtained. The dispersion was then transferred to a vacuum drier and the inert liquid was separated from the polyurethane dispersion under a reduced pressure of 50 mmHg or lower, whereby powdery polyurethane (No. 5) was obtained. The powdery polyurethane thus obtained was in the form of white, true spherical particles having an average particle size of 22 µm.

### Example 7

Polybutylene adipate (60.4 parts) having an average molecular weight of 2,000, 7.8 parts of 1,4-butanediol, 31.8 parts of 4,4'-methylenebis(cyclohexyl isocyanate) and 0.02 part of stannous octoate were heated to 40°C, at which they were stirred into a uniform mixture. The mixture was added gradually to a liquid mixture which had been provided in advance by mixing, for 20 minutes at a revolution velocity of 3,500 rpm, 20 parts of the silica dispersion (No. 5) of Example 1 and 380 parts of dimethyl polysiloxane (BP: 150°C) into a uniform mixture in a vacuum emulsifier equipped with a low-viscosity homogenizer (manufactured by Mizuho Kogyo K.K.), followed by emulsification for 60 minutes while the same revolution velocity was maintained. The emulsion thus obtained contained a dispersoid as particles having an average particle size of 35 µm and remained stable without separation. The reaction temperature was then elevated to 120°C. The reaction was completed in 5 hours, whereby a polyurethane dispersion was obtained. The dispersion was then transferred to a vacuum drier and the inert liquid was separated from the polyurethane dispersion under a reduced pressure of 50 mmHg or lower, whereby powdery polyurethane (No. 6) was obtained. The powdery polyurethane thus obtained was in the form of white, true spherical particles having an average particle size of 36 µm.

### Example 8

Polybutylene adipate (60.4 parts) having an average molecular weight of 2,000, 7.8 parts of 1,4-butanediol, 31.8 parts of 4,4'-methylenebis(cyclohexyl isocyanate) and 0.02 part of stannous octoate were heated to 40°C, at which they were stirred into a uniform mixture. The mixture was added gradually to a liquid mixture which had been provided in advance by mixing, for 20 minutes at a revolution velocity of 4,000 rpm, 10 parts of the silica dispersion (No. 5) of Example 1 and 390 parts of dimethyl polysiloxane (BP: 150°C) into a uniform mixture in a vacuum emulsifier equipped with a low-viscosity homogenizer (produced by Mizuho Kogyo K.K.), followed by emulsification for 60 minutes while the same revolution velocity was maintained. The emulsion thus obtained contained a dispersoid as particles having an average particle size of 64 µm and remained stable without separation. The reaction temperature was then elevated to 120°C. The reaction was completed in 5 hours, whereby a polyurethane dispersion was obtained. The dispersion was then transferred to a vacuum drier and the inert liquid was separated from the polyurethane dispersion under a reduced pressure of 50 mmHg or lower, whereby powdery polyurethane (No. 7) was obtained. The powdery polyurethane thus obtained was in the form of white, true spherical particles having an average particle size of 64 µm.

### Example 9

Polybutylene adipate (60.4 parts) having an average molecular weight of 2,000, 31.8 parts of 4,4'-methylenebis(cyclohexyl isocyanate) and 0.1 part of stannous octoate were heated to 40°C, at which they were stirred into a uniform mixture. The mixture was added gradually to a liquid mixture which had been provided in advance by mixing, for 20 minutes at a revolution velocity of 2,000 rpm, 200 parts of the silica dispersion (No. 4) of Example 1 and 200 parts of dimethyl polysiloxane (BP: 100°C) into a uniform mixture in a vacuum emulsifier equipped with a low-viscosity homogenizer (produced by Mizuho Kogyo K.K.), followed by emulsification for 60 minutes while the same revolution velocity was maintained. The emulsion thus obtained contained a dispersoid as particles having an average particle size of 4 µm and remained stable without separation. The reaction temperature was then elevated to 80°C. The reaction was completed in 5 hours, whereby a prepolymer was obtained. Under the same temperature conditions, the prepolymer was added with 7.8 parts of 1,4-butanediol in a form molten at 50°C. The temperature of the resultant mixture was raised to 95°C over 30 minutes, at which they were reacted for 3 hours to obtain a polyurethane dispersion. The dispersion was then transferred to a vacuum drier and the inert liquid was separated from the polyurethane dispersion under a reduced pressure of 50 mmHg or lower, whereby powdery polyurethane (No. 8) was obtained. The powdery polyurethane thus obtained was in the form of white, true spherical particles having an average particle size of 4 µm.

### Example 10

Twenty parts of "Quodrol" (trade mark, product of Asahi Denka Kogyo K.K., four functional groups) having an average molecular weight of 295 and 0.01 part of "DBU" (trade mark, product of Sun Abott Co., Ltd.) were added to 40 parts of the silica dispersion (No. 3) of Example 1 which had been charged in a reactor equipped with a propeller mixer, followed by stirring into a uniform emulsion at a revolution velocity of 500 rpm for 30 minutes. Added gradually under stirring at 500 rpm to the emulsion thus obtained was an emulsion which had been prepared in advance by uniformly emulsifying 50 parts of a hexamethylene diisocyanateisocyanurate conjugate ("Colonate EH", trade mark; product of Nippon Polyurethane Industry Co., Ltd.) in 100 parts of the silica dispersion (No. 3) of Example 1. The resultant emulsion was heated to 70°C, at which they were reacted for 6 hours to obtain a polyurethane dispersion. The dispersion was then transferred to a vacuum drier and the inert liquid was separated from the polyurethane dispersion under a reduced pressure of 50 mmHg or lower, whereby powdery polyurethane (9) was obtained. The powdery polyurethane thus obtained was in the form of white, true spherical particles having an average particle size of 2 µm.

Physical properties of a film made from each of the powdery polyurethanes (No. 1)-(No. 9) are shown in Table 2.

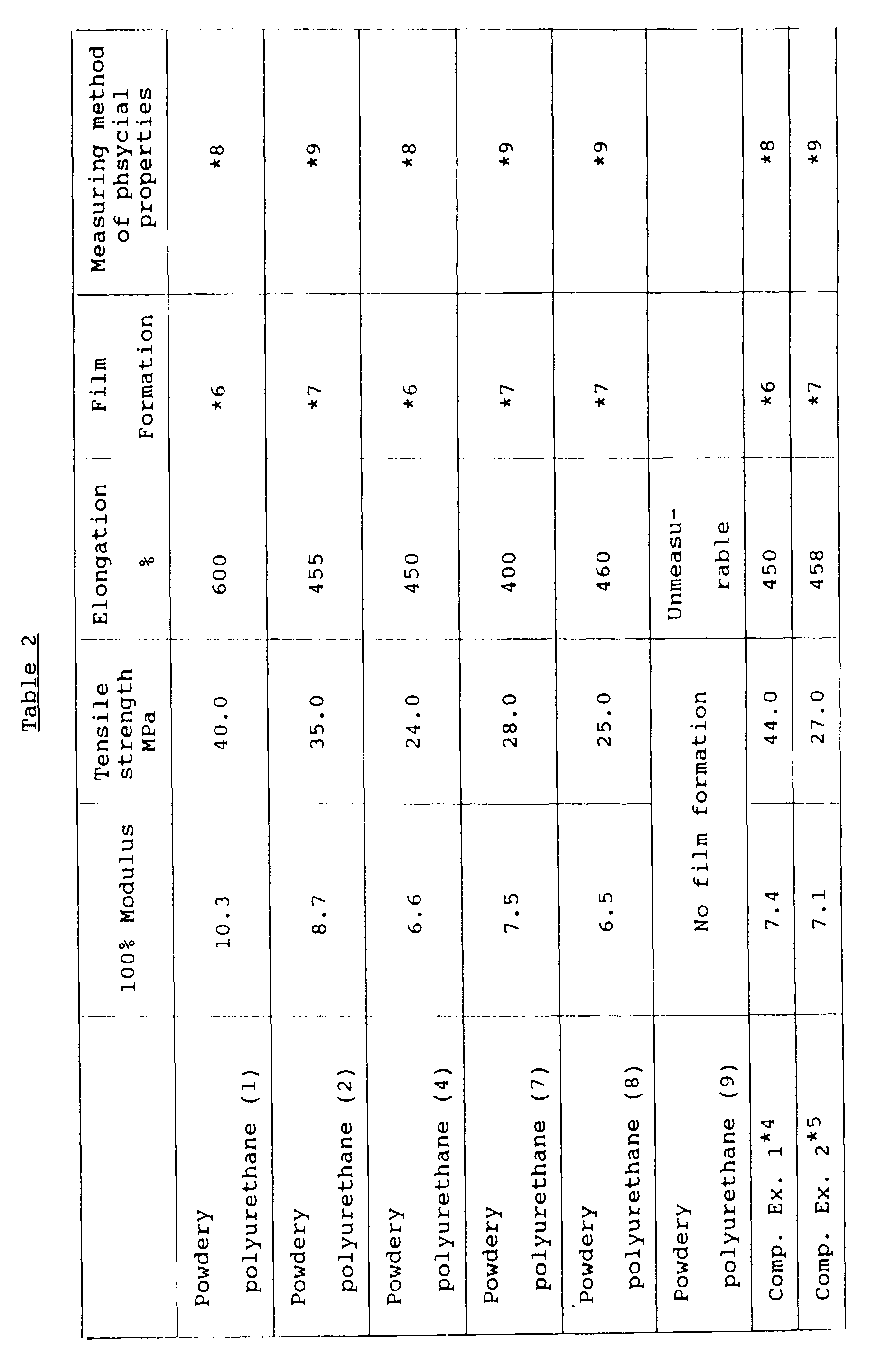

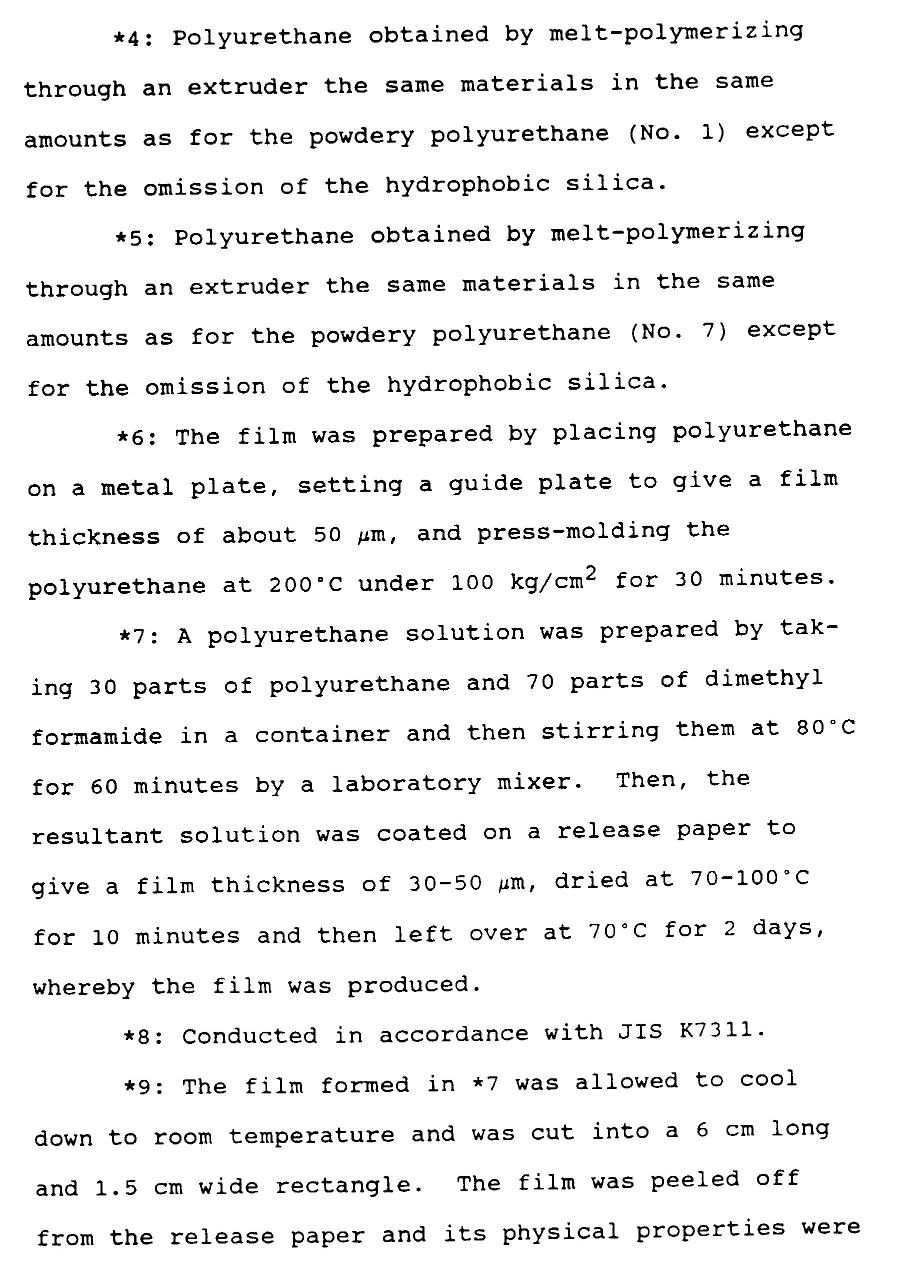

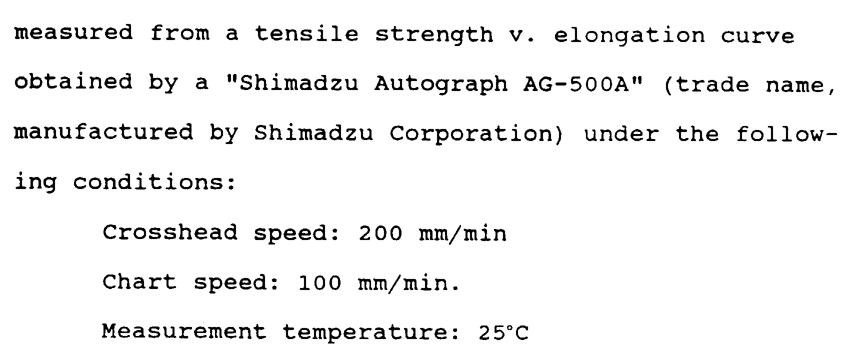

## Claims

1. A process for the production of a polyurethane, which comprises using a hydrophobic silica obtained by reacting a halogenated alkylsilane and/or an alkoxyalkylsilane with surface OH groups of a hydrophilic silica as an emulsifier upon emulsion polymerzation of an isocyanate compound and an active-hydrogen-containing compound in an inert liquid which is a non-solvent for polyurethanes and contains no active hydrogen.

2. The process of claim 1, wherein the product of the emulsion poylmerization is obtained from the inert liquid in the form of powder wherein the particles have a diameter in a range of 0.5-100 µm.

3. True spherical, fine polyurethane particles comprising polyurethane particles surface-coated with a hydrophobic silica obtained by reacting a halogenated alkylsilane and/or an alkoxyalkylsilane with surface OH groups of a hydrophilic silica, wherein the particles have a diameter in a range of 0.5-100 µm.

## Patentansprüche

1. Verfahren zur Herstellung eines Polyurethans, umfassend die Verwendung eines hydrophoben Siliciumdioxids, erhalten durch Umsetzung eines halogenierten Alkylsilans und/oder eines Alkoxyalkylsilans mit Oberflächen-OH-Gruppen eines hydrophilen Siliciumdioxids, als Emulgator bei der Emulsionspolymerisation einer Isocyanat-Verbindung und einer aktiven Wasserstoff enthaltenden Verbindung in einer inerten Flüssigkeit, die für Polyurethane kein Lösungsmittel ist und keinen aktiven Wasserstoff enthält.

2. Verfahren nach Anspruch 1, in dem das Produkt der Emulsionspolymerisation aus der inerten Flüssigkeit in Form von Pulver erhalten wird, in dem die Teilchen einen Durchmesser im Bereich von 0,5 - 100 µm aufweisen.

3. Wirklich kugelförmige Polyurethan-Feinteilchen, umfassend Polyurethanteilchen, die mit einem hydrophoben Siliciumdioxid oberflächenbeschichtet sind, das erhalten wurde durch Umsetzung eines halogenierten Alkylsilans und/oder eines Alkoxyalkylsilans mit Oberflächen-OH-Grupppen eines hydrophilen Siliciumdioxids, worin die Teilchen einen Durchmesser im Bereich von 0,5 - 100 µm aufweisen.

## Revendications

1. Procédé de fabrication d'un polyuréthanne, qui comprend l'utilisation en tant qu'émulsifiant d'une silice hydrophobe obtenue par réaction d'un alkylsilane halogéné et/ou d'un alcoxyalkylsilane avec des groupes OH de surface d'une silice hydrophile, lors de la polymérisation en émulsion d'un composé isocyanate et d'un composé contenant des hydrogènes actifs, dans un liquide inerte, qui est un non-solvant pour les polyuréthannes et ne contient pas d'hydrogène actif.

2. Procédé selon la revendication 1, dans lequel le produit de la polymérisation en émulsion est obtenu à partir du liquide inerte sous la forme d'une poudre dans laquelle les particules ont un diamètre se situant dans la plage de 0,5-100 µm.

3. Particules de polyuréthanne, fines, réellement sphériques, comprenant des particules de polyuréthanne revétues en surface par une silice hydrophobe, obtenue par réaction d'un alkylsilane halogéné et/ou d'un alcoxyalkylsilane avec des groupes OH de surface d'une silice hydrophile, lesdites particules ayant un diamètre se situant dans une plage de 0,5-100 µm.
